# DEMANDE DE BREVET EUROPEEN

(11) **EP 2 239 186 A1**
(43) Date de publication de la demande: **13.10.2010**
(21) Numéro de dépôt: 10159462.0
(22) Date de dépôt: 09.04.2010
(51) Int. Cl.: B62D 33/063

(54) **Véhicule agricole polyvalent**

(30) Priorité: 09.04.2009 FR 0952371
(71) Demandeur: Freres, Arnaud, 26130 Saint-Paul-Trois-Chateaux (FR)
(72) Inventeur: Arnaud, Didier, 26130, SAINT-PAUL-TROIS-CHATEAUX (FR)
(74) Mandataire: Delorme, Nicolas

(57) **Abrégé**

Ce véhicule agricole comprenant un châssis (4) présentant au moins deux longerons parallèles et quatre roues (2, 3), le châssis (4) étant surélevé au dessus des quatre roues (2, 3) pour circuler au dessus d'un rang de plantes.

Selon l'invention, le véhicule comprend, de plus, une cabine positionnée au dessus d'un longeron et un groupe technique incorporant notamment un moteur positionné au dessus de l'autre longeron, la cabine et le groupe technique étant reliés solidairement par une poutre transversale, la cabine et le groupe technique pouvant se déplacer longitudinalement par rapport au châssis (4) par des moyens de glissement interposés entre le châssis (4) et la cabine et le groupe technique, entre une position dite « cabine avant » et une position dite « cabine arrière ».

## Description

La présente invention concerne un véhicule agricole polyvalent.

Certains fruits, comme les raisins, poussent sur des arbustes qui sont cultivés en rang et qui nécessitent, outre la récolte, de nombreuses opérations telles que l'effeuillage, l'écimage, la taille, l'épandage de fumier ou la pulvérisation de produits phytosanitaires ou le travail du sol.

Il existe donc des outils spécifiques pour chacune de ces opérations ; ces outils sont montés pour une tâche spécifique sur un véhicule motorisé dit porte outil.

Un véhicule porte outil est pour cela équipé de moyens de connexions mécanique, hydraulique et électrique pour recevoir soit en partie avant, par exemple, un outil d'effeuillage ou de palissage soit en partie arrière par exemple, un outil de travail du sol type herse, un épandeur ou un pulvérisateur.

On perçoit le grand intérêt d'un porte outil pour un exploitant puisqu'un unique véhicule lui permet de réaliser l'ensemble des opérations sur ses cultures grâce à des outils spécifiques qui sont embarqués sur un véhicule pour réaliser une opération spécifique.

L'architecture d'un porte outil viticole est de manière classique de type en portique c'est-à-dire qu'elle permet au véhicule d'enjamber un ou deux rangs de plantes (pied de vigne ou autre arbuste) tandis que les roues du véhicule circulent dans les espaces inter rangs.

L'architecture d'un porte outil comprend un châssis sur lequel sont fixées deux roues arrière et deux roues avant généralement directrices. Le châssis est porté au dessus des roues pour enjamber un rang de plantes. Le poste de pilotage est placé au dessus de l'une des roues avant tandis que le bloc technique moteur est placé au dessus de l'autre roue avant.

Cette architecture est bien adaptée lorsque le véhicule reçoit des outils sur sa partie arrière. L'ensemble véhicule/outil en partie arrière est équilibré.

En revanche, certains outils doivent être placés sur la partie avant du véhicule notamment pour permettre au conducteur d'effectuer un contrôle visuel des opérations.

De façon habituelle, un bras articulé est monté sur la partie avant du véhicule pour effectuer des opérations, par exemple de taille.

Dans cette configuration l'ensemble véhicule/outil en partie avant est fondamentalement déséquilibré sur l'avant à tel point qu'il faut alors compenser ce déséquilibre en plaçant des charges sur la partie arrière du véhicule. Cette solution est peu satisfaisante dans la mesure où les charges ont pour effet d'augmenter la consommation de carburant et d'augmenter le tassement des sols.

En outre, le bras qui est en porte-à-faux sur l'avant du véhicule est préjudiciable à la maniabilité du véhicule et peut générer un phénomène de guidonnage.

Le concept du véhicule porte outil apparaît présenter des défauts pratiques qui peuvent dépasser ses avantages.

Dans un autre domaine technique qui est celui des chariots à bras télescopiques, on connait par le document FR 2 696 199 un véhicule dont la cabine présente un siège qui peut être déplacé entre deux postes de commande.

Dans ce contexte technique, un but de l'invention est de proposer un véhicule porte outil qui puisse être adapté à différentes travaux.

L'invention concerne un véhicule agricole comprenant un châssis et quatre roues, le châssis étant surélevé au dessus des quatre roues pour circuler au dessus d'un rang de plantes, **caractérisé en ce que** le véhicule comprend, de plus, une cabine comprenant un siège et un organe de conduite, positionnée au dessus du châssis associée à un groupe technique incorporant notamment un moteur fournissant la puissance au véhicule, la cabine et le groupe technique étant reliés solidairement et la cabine et le groupe technique pouvant se déplacer longitudinalement par rapport au châssis par des moyens de glissement interposés entre le châssis et la cabine et le groupe technique, entre des positions dite «avant », «arrière » et «intermédiaire » de la cabine et du groupe technique.

Ainsi, l'invention prévoit de rendre mobile l'ensemble solidaire cabine et groupe technique d'un véhicule agricole de type enjambeur.

Grâce à la présence de moyens de glissement entre le châssis et l'ensemble cabine et groupe technique, il est possible de faire glisser ce dernier entre une position « avant » permettant de dégager de l'espace pour recevoir par exemple un pulvérisateur ou une trémie et une position « arrière » qui permet de placer, dans l'espace délimité par les longerons, un outil tel qu'un bras. Une position intermédiaire permet d'embarquer des outils à l'avant et à l'arrière puisque la cabine et la groupe technique se trouve sensiblement au milieu du châssis.

Selon une forme de réalisation, le châssis présente au moins deux longerons parallèles et quatre roues et la cabine est positionnée au dessus d'un longeron et le groupe technique incorporant notamment un moteur est positionné au dessus de l'autre longeron, la cabine et le groupe technique étant reliés solidairement par une poutre transversale, la cabine et le groupe technique pouvant se déplacer longitudinalement par rapport au châssis par des moyens de glissement interposés entre le châssis et la cabine et le groupe technique, entre des positions dites « avant », « arrière » et « intermédiaire » de la cabine et du groupe technique.

Selon une autre forme de réalisation, le châssis présente une poutre centrale et la cabine est positionnée au dessus de la poutre centrale et le groupe technique est disposé en tandem par rapport à la cabine, la cabine et le groupe technique pouvant se déplacer longitudinalement par rapport au châssis par des moyens de glissement interposés entre le châssis et la cabine et le groupe technique, entre des positions dites « avant », « arrière » et « intermédiaire » de la cabine et du groupe technique.

Pour assurer la mobilité de l'ensemble cabine et groupe technique, le véhicule comprend des moyens de mise en mouvement de la cabine et du groupe technique.

Dans une forme de réalisation, la cabine et le groupe technique comprennent des coulisseaux engagés dans des glissières ménagées dans les longerons.

De plus, il comprend au moins un vérin double effets assurant le déplacement de la cabine et du groupe technique entre la position dite « cabine avant » et la position dite « cabine arrière ».

En outre, le groupe technique inclut un moteur à combustion interne associé à une pompe hydraulique.

Pour sa bonne compréhension, l'invention est décrite en référence au dessin annexé représentant à titre d'exemple non limitatif deux formes de réalisation d'un véhicule selon celle-ci.
Figures 1 et 2 montrent respectivement une vue de côté et une vue de dessus du véhicule selon une première forme de réalisation dans une configuration « cabine avant »,
Figures 3 et 4 montrent respectivement, en vue de côté et en vue de dessus, le véhicule dans une configuration « cabine arrière »,
Figures 5 et 6 montrent respectivement, en vue de côté et en vue de dessus, le véhicule dans une configuration « cabine arrière »,
Figure 7 et 8 montrent respectivement une vue de côté et une vue de dessus du véhicule selon une deuxième forme de réalisation dans une configuration « cabine avant »,
Figures 9 et 10 montrent respectivement, en vue de côté et en vue de dessus, le véhicule dans une configuration « cabine arrière »,
Figures 11 et 12 montrent respectivement, en vue de côté et en vue de dessus, le véhicule dans une configuration « cabine arrière »,
Figure 13 montre un détail de réalisation de l'invention.

La description qui va suivre est faite par rapport à un référentiel XYZ dans lequel l'axe X est l'axe longitudinal du véhicule et par rapport auquel les termes notamment « avant », « arrière » se réfèrent, dans lequel l'axe Y est l'axe transversal du véhicule et par rapport auquel les termes notamment « latéral », « droite », « gauche » se réfèrent, et dans lequel l'axe Z est l'axe vertical par rapport auquel les termes notamment « haut », « bas » se réfèrent.

Les éléments communs aux deux formes de réalisations présentent les même références numériques.

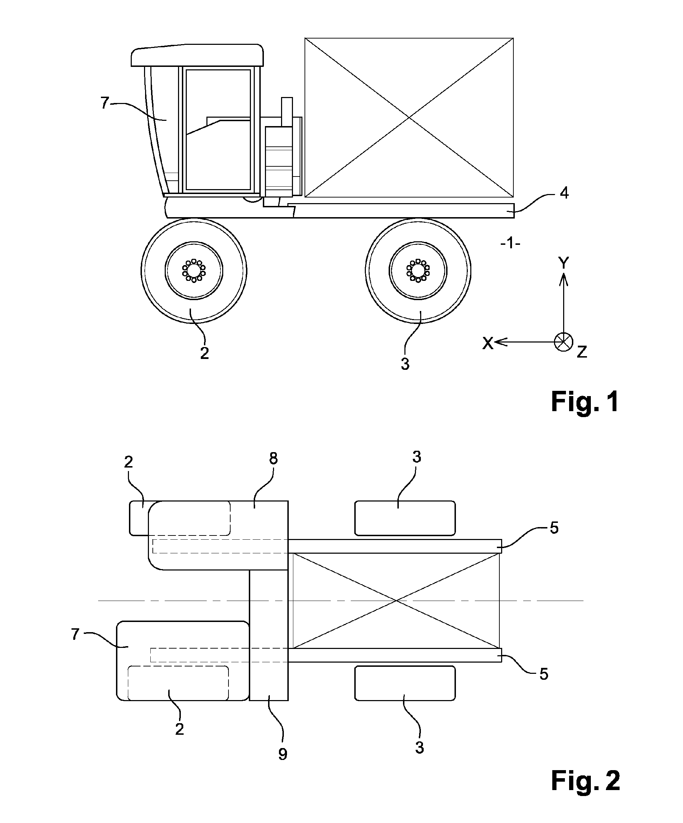

En se référant à la figure 1, on peut voir que le véhicule 1 selon l'invention présente deux roues avant 2 et deux roues arrière 3 reliées à un châssis 4.

Dans l'exemple de réalisation représenté sur le dessin, le châssis 4 comprend deux longerons 5 parallèles. Chaque longeron 5 est doté de deux jambes sur lesquelles sont montées une roue avant 2 et une roue arrière 3.

Une ou plusieurs entretoises peuvent être disposées entre les longerons 5.

Le châssis 4 se trouve ainsi au dessus des roues 2, 3 de façon à présenter une garde au sol qui permette de passer au dessus d'un rang de plantes de type pieds de vigne.

Comme on peut le voir sur la figure 1, le véhicule possède une cabine 7 qui est placée sur l'un des longerons 5 et un groupe technique 8 qui est placé sur l'autre longeron 5.

Le groupe technique 8 comprend un moteur à combustion interne qui, de préférence, entraîne une pompe hydraulique.

Le véhicule est, en effet, doté de plusieurs moteurs hydrauliques qui sont notamment disposés dans deux ou dans quatre roues pour assurer la propulsion.

Une poutre transversale 9 relie la cabine 7 et le groupe technique 8 rendant ainsi solidaire la cabine 7 et le groupe technique 8.

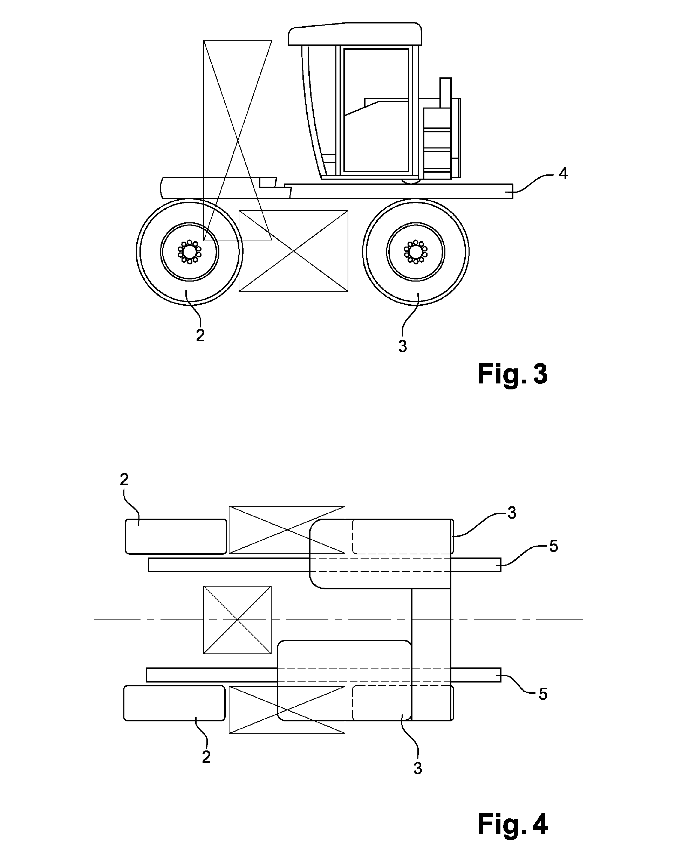

De façon tout à fait originale, l'ensemble constitué par la cabine 7, le groupe technique 8 et la poutre transversale 9 peut coulisser entre une position avant dans laquelle la cabine et le groupe technique sont positionnés en butée avant des longerons (voir figure 1) et une position arrière dans laquelle la cabine 7 et le groupe technique 8 se trouvent sensiblement au dessus des roues arrière 3 (voir figure 3).

Pour permettre le glissement de l'ensemble cabine 7 et groupe technique 8, il peut être prévu que les deux longerons soient pourvus de glissières. Des coulisses liées à la cabine 7 et au groupe technique 8 sont engagées dans les glissières pour permettre le déplacement de la cabine 7 et du groupe technique 8.

Les glissières peuvent être par exemple des glissières à rouleaux.

Il peut être prévu des moyens de verrouillage mécaniques, comme par exemple un doigt rentrant dans une ouverture pour bloquer l'ensemble cabine et groupe technique dans ses positions avant et arrière et éventuellement dans une ou plusieurs positions intermédiaires.

On a vu que le véhicule est doté de moyens de déplacement de l'ensemble cabine et groupe technique par rapport au châssis ; le véhicule est également doté de moyens de mise en mouvement de l'ensemble cabine et groupe technique, de façon à rendre le véhicule totalement autonome.

Ainsi, le véhicule peut intégrer deux vérins double effet qui sont placés dans chaque longerons 5 et qui permettent de mettre l'ensemble cabine 7 et groupe technique 8 en mouvement pour passer d'une position à l'autre.

Les figures 1, 3 et 5 illustrent en vue de coté certains des avantages de l'invention.

La figure 1 montre le véhicule en configuration « cabine avant ». Dans cette configuration, la plateforme en arrière de la cabine 7 et du groupe technique 8 peut être utilisée pour recevoir une trémie ou la cuve d'un pulvérisateur. Dans cette configuration, le véhicule est équilibré.

La figure 2 montre le véhicule en configuration « cabine arrière ». Cette configuration s'avère très avantageuse. En effet, le véhicule peut recevoir un bras articulé équipé par exemple d'une tailleuse. Le centre de gravité du véhicule reste à l'intérieur de l'espace délimité par les roues, ce qui signifie que le véhicule est équilibré.

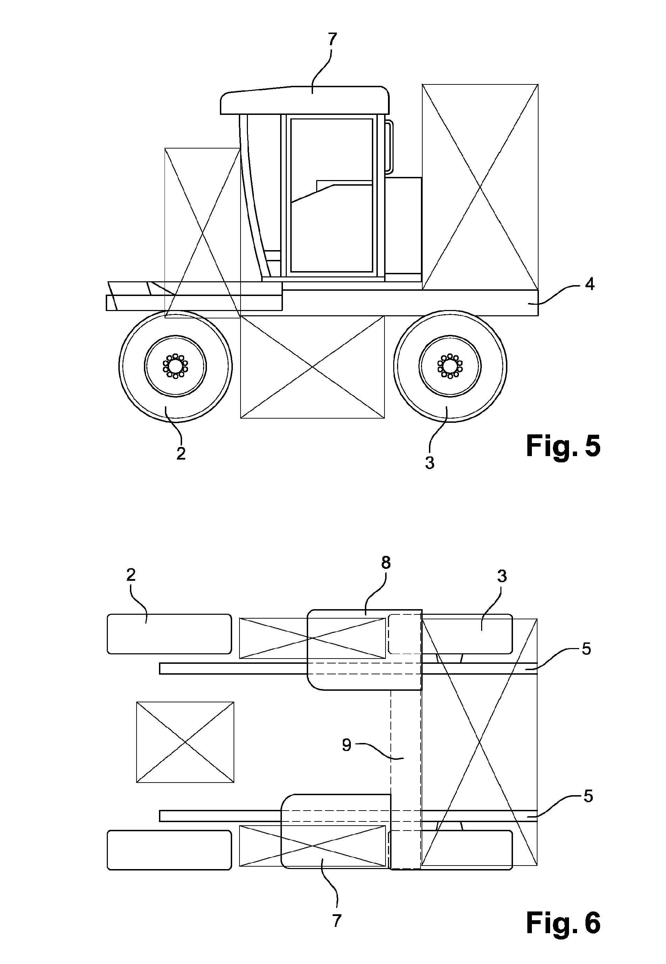

La figure 5 montre le véhicule en configuration dite « cabine intermédiaire » c'est-à-dire dans une position dans laquelle la cabine 7 et le groupe technique 8 sont sensiblement au milieu du châssis 4 ce qui permet d'embarquer des outils à l'avant et à l'arrière du véhicule.

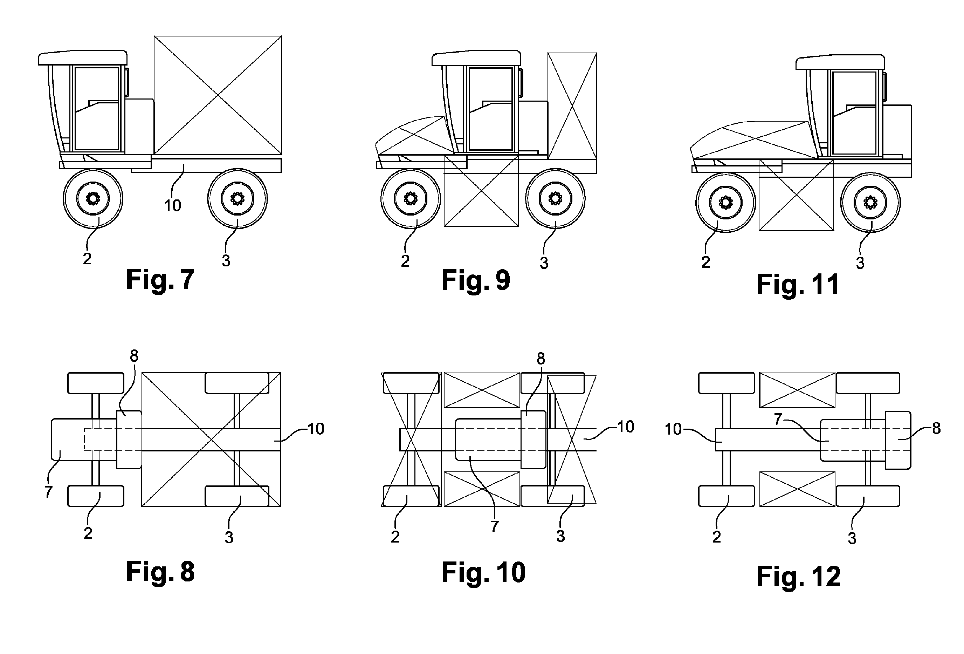

Les figures 8 à 12 montrent une variante d'exécution de l'invention dans laquelle le châssis 4 comprend une poutre centrale 10 sur laquelle se raccordent de manière classique des moyens de liaison au sol et suspension.

Dans ce cas de figure la cabine 7 qui embarque un siège et un organe de commande de type volant ou joystick est accolé au groupe technique 8. La cabine 7 et le groupe technique 8 sont disposés en tandem et peuvent se déplacer entre une position avant, arrière ou intermédiaire comme le montre les figures 8 à 12.

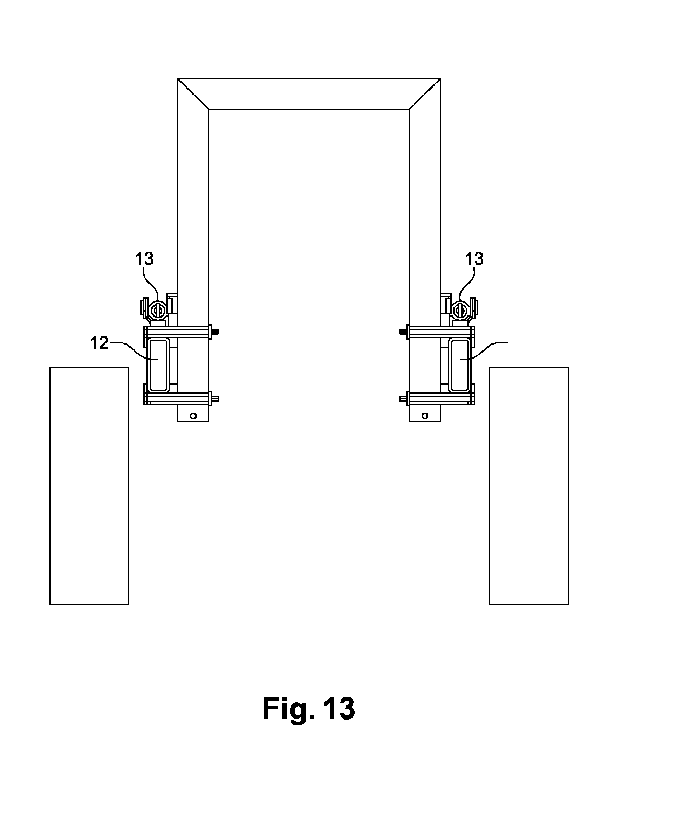

La figure 13 montre une forme de réalisation des moyens de glissement qui comprennent des glissières 12 et des vérins 13 ou crémaillère pour réaliser le déplacement de la cabine 7 et du moteur 8.

Bien entendu, l'invention n'est pas limitée à la forme de réalisation décrite ci-dessus à titre d'exemple non limitatif mais elle en embrasse au contraire toute les formes de réalisation.

## Revendications

1. Véhicule agricole comprenant un châssis (4) et quatre roues (2,3), le châssis (4) étant surélevé au dessus des quatre roues (2, 3) pour circuler au dessus d'un rang de plantes, **caractérisé en ce que** le véhicule comprend, de plus, une cabine (7) comprenant un siège et un organe de conduite, positionnée au dessus du châssis (4) associée à un groupe technique (8) incorporant notamment un moteur fournissant la puissance au véhicule, la cabine (7) et le groupe technique (8) étant reliés solidairement et la cabine (7) et le groupe technique (8) pouvant se déplacer longitudinalement par rapport au châssis (4) par des moyens de glissement interposés entre le châssis (4) et la cabine (7) et le groupe technique (8), entre des positions dites « avant », « arrière » et « intermédiaire » de la cabine (7) et du groupe technique (8).

2. Véhicule agricole selon la revendication 1, **caractérisé en ce que** le châssis (4) présente au moins deux longerons (5) parallèles et quatre roues (2, 3) et **en ce que** la cabine (7) est positionnée au dessus d'un longeron (5) et le groupe technique (8) incorporant notamment un moteur est positionné au dessus de l'autre longeron (5), la cabine (7) et le groupe technique (8) étant reliés solidairement par une poutre transversale (9), la cabine (7) et le groupe technique (8) pouvant se déplacer longitudinalement par rapport au châssis (4) par des moyens de glissement interposés entre le châssis (4) et la cabine (7) et le groupe technique (8), entre des positions dite « avant », « arrière » et « intermédiaire » de la cabine (7) et du groupe technique (8).

3. Véhicule agricole selon I revendication 1 **caractérisé en ce que** le châssis (4) présente une poutre centrale et **en ce que** la cabine est positionnée au dessus de la poutre centrale et le groupe technique (8) disposé en tandem par rapport à la cabine (7), la cabine (7) et le groupe technique (8) pouvant se déplacer longitudinalement par rapport au châssis (4) par des moyens de glissement interposés entre le châssis (4) et la cabine (7) et le groupe technique (8), entre des positions dites « avant » , « arrière » et « intermédiaire » de la cabine (7) et du groupe technique (8).

4. Véhicule agricole selon l'une des revendications 1 à 3, **caractérisé en ce qu'**il comprend des moyens de mise en mouvement de la cabine et du groupe technique.

5. Véhicule agricole selon l'une des revendications 1 à 4, **caractérisé en ce que** la cabine (7) et le groupe technique (8) comprennent des coulisseaux engagés dans des glissières ménagées dans les longerons (5).

6. Véhicule agricole selon l'une des revendications 4 à 5, **caractérisé en ce qu'**il comprend au moins un vérin double effets assurant le déplacement de la cabine (7) et du groupe technique (8) entre la position dite « avant » et la position dite « arrière ».

7. Véhicule agricole selon l'une des revendications 1 à 6, **caractérisé en ce que** le groupe technique inclut un moteur à combustion interne associé à une pompe hydraulique.
